(19) Europäisches Patentamt
European Patent Office
Office européen des brevets

(11) EP 2 860 282 B1

(12) EUROPEAN PATENT SPECIFICATION

(45) Date of publication and mention of the grant of the patent:
**28.02.2018 Bulletin 2018/09**

(21) Application number: **14188278.7**

(22) Date of filing: **09.10.2014**

(51) Int Cl.:
*C23C 24/00* (2006.01) *C23C 26/00* (2006.01)
*C23D 5/02* (2006.01) *C23D 5/00* (2006.01)
*F01N 13/00* (2010.01) *F01N 13/14* (2010.01)
*C03C 8/14* (2006.01) *C03C 3/12* (2006.01)
*C03C 8/16* (2006.01) *C08K 3/22* (2006.01)
*C09D 101/28* (2006.01) *C08K 3/38* (2006.01)
*F01N 13/08* (2010.01)

(54) **Structure**

Struktur

Structure

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2013 JP 2013213251**

(43) Date of publication of application:
**15.04.2015 Bulletin 2015/16**

(73) Proprietor: **Ibiden Co., Ltd.**
**Ogaki-shi**
**Gifu 503-8604 (JP)**

(72) Inventors:
- **Mutsuda, Fumiyuki**
**Gifu, 501-0695 (JP)**
- **Fujita, Yoshitaka**
**Gifu, 501-0695 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 213 856**
**EP-A1- 2 474 719**
**WO-A2-2010/008577**
**US-A1- 2001 009 692**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 860 282 B1

## Description

TECHNICAL FIELD

The present invention relates to a structure.

BACKGROUND ART

A catalytic converter is provided in the path of an exhaust pipe to treat toxic substances contained in exhaust gas discharged from an engine.

It is necessary to maintain the temperatures of exhaust gas, an exhaust pipe through which the exhaust gas passes, and the like at temperatures suitable for catalytic activation (hereinafter, also referred to as catalyst activation temperatures) in order to improve conversion efficiency of toxic substances by a catalytic converter.

In a conventional exhaust gas purifying system, the temperature of the catalytic converter at the start of the engine is lower than the catalyst activation temperature, and thus the catalyst fails to provide its functions. It has therefore been difficult to completely prevent toxic substances from being discharged at the start of the engine.

For this reason, it is required to raise the temperature of an exhaust pipe connected to an engine to the catalyst activation temperature in a short time after the start of the engine.

Patent Literatures 1 to 3 each deal with the above problem by providing a structure that includes a base made of a metal and an inorganic material surface layer made of crystalline and amorphous inorganic materials. The inorganic material surface layer has lower heat conductivity than the base but has a higher infrared radiation rate than the base.

CITATION LIST

- Patent Literature

Patent Literature 1: JP 2008-69383 A
Patent Literature 2: JP 2009-133213 A
Patent Literature 3: JP 2009-133214 A

EP 2 474 719 A1 discloses an exhaust gas purification device comprising a honeycomb structure in a cylindrical metallic member having an insulating layer including a glass layer and a mixed layer which includes an amorphous binder and a crystalline metal oxide.

SUMMARY OF INVENTION

- Technical Problem

The exhaust pipe described above has bumps such as weld beads and weld spatters which are formed during welding. If part of the exhaust pipe is a double pipe, the double pipe has an edge portion at an end of the exhaust pipe present partly on its inner side or outer side.

In the case of forming the surface coat layer suggested in any of Patent Literature documents 1 to 3 on a structure having bumps and edge portions, a melt layer formed by heating an applied paint at high temperatures has low viscosity which lets the paint flow easily from the bumps or edge portions toward the other portions, eventually resulting in a layer with an insufficient thickness. Such a surface coat layer may have a small thickness on the bumps and edge portions, and unpainted portions may generate in some cases. Such bumps and edge portions unfortunately show insufficient properties including heat insulation properties. By contrast, an attempt to form a thick surface coat layer by forming a melt layer with high viscosity unfortunately results in a layer of which the thickness is not entirely uniform.

The present invention has been made to solve these problems, and aims to provide a structure including a surface coat layer of which the thickness on a bump such as a weld bead and a weld spatter or an edge portion of a double structure, possibly formed on the surface of a base, is not greatly different from the thickness on a flat portion. The structure therefore has excellent properties including heat insulation properties.

- Solution to Problem

In order to achieve the above aim, the present invention provides a structure including: a base that is made of a metal, and has a flat portion and at least one of a bump and an edge portion on a surface; and a surface coat layer that covers the surface of the base, the surface coat layer including: a first surface coat layer that covers the flat portion, and contains an amorphous inorganic material, or a crystalline inorganic material and an amorphous inorganic material in combination; and a second surface coat layer that covers the at least one of a bump and an edge portion, and contains the crystalline inorganic material and the amorphous inorganic material, the second surface coat layer containing a higher percentage by weight of the crystalline inorganic material than does the first surface coat layer, the first surface coat layer, the second surface coat layer and the bump are further defined in the claims.

Hereinafter, a simple expression of "surface coat layer" refers to a surface coat layer including both the first surface coat layer and the second surface coat layer.

The percentage by weight of particles of the crystalline inorganic material in the second surface coat layer is calculated from the following formula (1) relating to particles of the crystalline inorganic material and the amorphous inorganic material constituting the second surface coat layer.

[Weight of particles of crystalline inorganic material/(weight of particles of crystalline inorganic material + weight of amorphous inorganic material)] × 100 ...... (1)

Similarly to that of the second surface coat layer, the percentage by weight of the crystalline inorganic material in the first surface coat layer is calculated by the same formula (1) but relating to particles of the crystalline inorganic material and the amorphous inorganic material constituting the first surface coat layer.

The structure of the present invention includes a surface coat layer containing an amorphous inorganic material and a crystalline inorganic material. The surface coat layer includes a first surface coat layer that covers a flat portion, and a second surface coat layer that covers at least one of a bump and an edge portion (hereinafter, also simply referred to as "a portion such as a bump"). The second surface coat layer contains a higher percentage by weight of the crystalline inorganic material than does the first surface coat layer. This means that the second surface coat layer is formed from a paint composition containing less molten amorphous inorganic material per unit volume than a paint composition for forming the first surface coat layer, and that the paint composition for the second surface coat layer, when molten, has higher flow resistance than the paint composition for the first surface coat layer. Accordingly, in the case where the second surface coat layer is formed by forming a coating layer with such a paint composition on a portion such as a bump and heating the coating layer, the coating layer is formed into a melt layer with high viscosity, and the resulting second surface coat layer has a large and uniform thickness over the whole portion, and has at least a thickness not greatly different from the thickness of the first surface coat layer on a flat portion. As a result, the whole structure of the present invention is provided with excellent properties including heat insulation properties and electrical insulation properties.

If the paint composition for the first surface coat layer is directly applied to a bump or an edge portion, the composition provides a melt layer with low viscosity. This may results in a surface coat layer having a small thickness on the bump or edge portion, or unpainted portions on the bump or edge portion. Unfortunately, the bump or edge portion may have inferior properties including heat insulation properties.

Hereinafter, a melt layer refers to a melt layer formed by mixing particles of an amorphous inorganic material and particles of a crystalline inorganic material to prepare a paint composition, applying the paint composition to the surface of a base, and heating the composition.

The bump herein is, in a cross section perpendicular to the base surface, a part surrounded by a base surface line and a virtual surface line in a region where the base surface line and the virtual surface line are different from one another.

The thickness of the second surface coat layer on bumps is determined by drawing a perpendicular line to a tangent line of each tangent point on the base surface line defining each bump; randomly selecting 10 perpendicular lines each including a line segment that is bounded by the corresponding tangent point and a point on the surface of the structure and crosses only the second surface coat layer; and averaging the lengths of the 10 line segments included by the perpendicular lines. In the case of measurement using DUALSCOPE MP40 from Fischer Instruments K.K., for example, the thickness is determined by calibrating the thickness based on readings at any 30 points, measuring the thickness at 10 points, and averaging the readings at those points. For the measurement of the thickness at 10 points, the 10 points are preferably randomly selected without concentration of measurement points within the measurement region. For example, the measurement can be performed at equal intervals of 1 mm.

Here, the base surface line is a line actually forming the surface of the base in a cross section perpendicular to the base surface. The virtual surface line is a line drawn by extending the base surface line of the flat portion in a cross section perpendicular to the base surface.

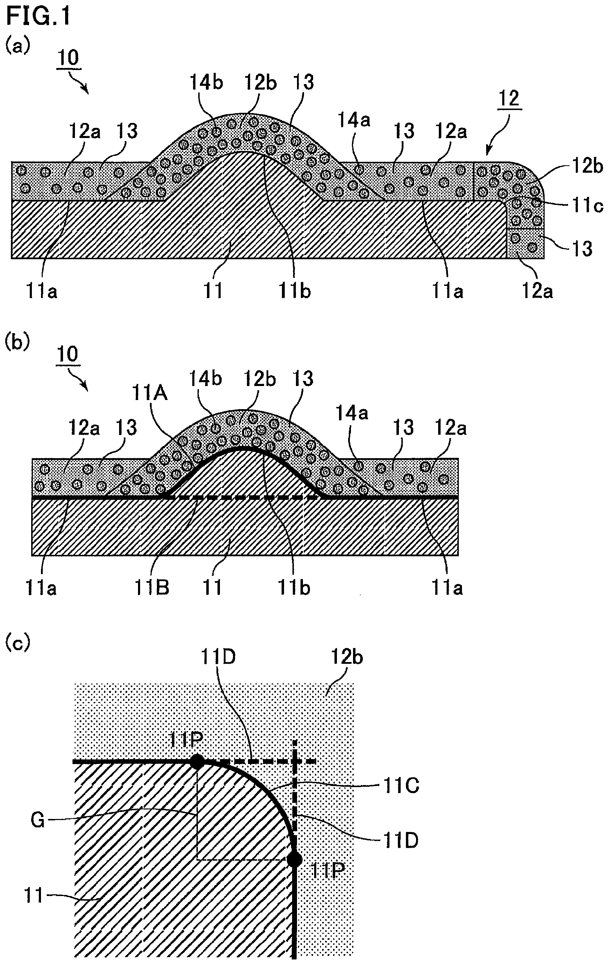

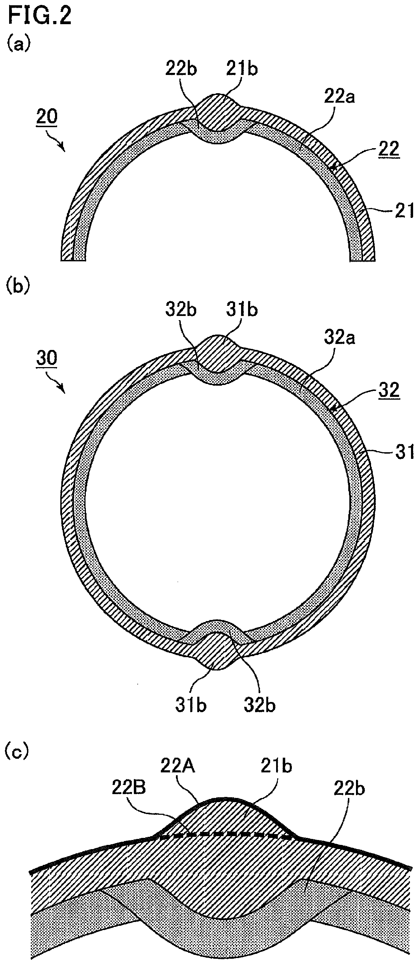

That is, the bump herein is, in an enlarged cross-sectional view of the vicinity of a bump in a structure as illustrated in Fig. 1(b) or an enlarged cross-sectional view of the vicinity of a bump in a half-cut member as illustrated in Fig. 2(c), a part surrounded by a base surface line 11A and a virtual surface line 11B or by a base surface line 22A and a virtual surface line 22B in a region where the base surface lines 11A and 22B are different from the respective corresponding virtual surface lines 11B and 22B.

Also, the edge portion herein is, in a cross section perpendicular to the base surface, a part surrounded by an edge portion surface segment formed by a base surface line in a region where the base surface line and virtual surface lines are different from one another except for bumps, and perpendicular lines which are perpendicular to the respective tangent lines at the end points of the edge portion surface segment on the base surface line.

That is, the edge portion herein is, in an enlarged cross-sectional view of the vicinity of an edge portion of a structure as illustrated in Fig. 1(c), a part surrounded by an edge portion surface segment formed by a base surface line 11C in a region where the base surface line 11C and virtual surface lines 11D are different from one another, and perpendicular lines G which are perpendicular to the respective tangent lines at points 11P (end points) of the edge portion surface segment on the base surface line 11C.

The thickness of the second surface coat layer on an edge portion is determined by drawing perpendicular lines to tangent lines of 10 randomly selected tangent points on the base surface line, and averaging the lengths of line segments which are included in the perpendicular lines and are bounded by the respective corresponding tangent points and points on the surface of the structure. In the case of measurement using DUALSCOPE MP40 from Fischer Instruments K.K., for example, the thickness is determined by calibrating the thickness based on readings at any 30 points, measuring the thickness at 10 points, and averaging the readings at those points.

For the measurement of the thickness at 10 points, the 10 points are preferably randomly selected without concentration of measurement points within the measurement region. For example, the measurement can be performed at equal intervals of 1 mm.

In the structure of the present invention, the first surface coat layer is free from the crystalline inorganic material or contains the crystalline inorganic material in an amount of 0.1 to 5% by weight, and the second surface coat layer contains the crystalline inorganic material in an amount of 5 to 70% by weight.

In the case where the second surface coat layer of the structure of the present invention contains the crystalline inorganic material in an amount of 5 to 70% by weight, which is higher than the percentage by weight of the crystalline inorganic material in the first surface coat layer, the second surface coat layer is formed from a paint composition containing less molten amorphous inorganic material per unit volume than a paint composition for forming the first surface coat layer. Thus, the paint composition for the second surface coat layer, when molten, has higher flow resistance than the paint composition for the first surface coat layer. Accordingly, in the case where the second surface coat layer is formed by forming a coating layer with the paint composition on a portion such as a bump or an edge portion and heating the coating layer, the resulting second surface coat layer has a large and uniform thickness over the whole portion, and has at least a thickness not greatly different from the thickness of the first surface coat layer on a flat portion, which is attributed to high viscosity of the paint composition.

The second surface coat layer more preferably contains the crystalline inorganic material in an amount of 20 to 70% by weight.

If the second surface coat layer contains the crystalline inorganic material in an amount of 20 to 70% by weight, namely, a large proportion of the second surface coat layer is constituted by the crystalline inorganic material, the second surface coat layer is formed from a melt layer containing less molten amorphous inorganic material per unit volume and thus having high flow resistance. Therefore, the viscosity of the melt layer is high enough to allow for formation of a thicker surface coat layer on a portion such as a bump. If the second surface coat layer contains the crystalline inorganic material in an amount of more than 70% by weight, the flow resistance of the prepared paint composition increases excessively high, bringing difficulties in formation of a film.

The crystalline inorganic material contained in the second surface coat layer is preferably particles having an average particle size of from 0.1 to 50 $\mu$m.

In the case where the crystalline inorganic material in the second surface coat layer is particles having an average particle size of from 0.1 to 50 $\mu$m, the second surface coat layer is formed from a melt layer in which the contact area of the crystalline inorganic material to the amorphous inorganic material in the molten state is large to increase the viscosity. Hence, a thicker surface coat layer can be formed on a portion such as a bump.

More preferably, the particles of the crystalline inorganic material in the second surface coat layer have an average particle size of from 0.1 to 10 $\mu$m. In the case where the particles of the crystalline inorganic material in the second surface coat layer have an average particle size of from 0.1 to 10 $\mu$m, a melt layer with a viscosity in a suitable range is formed. Hence, a thicker surface coat layer can be formed on a portion such as a bump.

The average particle size of particles of the crystalline inorganic material herein is the average particle size of particles of the crystalline inorganic material measured with Laser Diffraction Particle Size Analyzer (SALD-300V) from Shimadzu Corporation before mixing of the particles with other materials for forming a surface coat layer.

In the structure of the present invention, the crystalline inorganic material preferably contains at least one selected from the group consisting of calcia, magnesia, ceria, alumina, and an oxide of a transition metal.

If any of the above compounds is used as the crystalline inorganic material in the structure of the present invention, generation of defects such as cracks due to deterioration of the mechanical strength of the surface coat layer can be prevented because the crystalline inorganic material has excellent heat resistance and mechanically strengthens the surface coat layer. Especially, the use of an oxide of aluminum contributes to improvement of the electrical insulation properties of an exhaust pipe.

Also, if an oxide of a transition metal is used as the crystalline inorganic material, the oxide of a transition metal, having a high infrared emissivity, gives a high infrared emissivity to the surface coat layer.

In the structure of the present invention, the crystalline inorganic material preferably contains at least one selected from the group consisting of $\alpha$-alumina and yttria-stabilized zirconia.

If any of the above compounds is used as the crystalline inorganic material, the compound gives better heat resistance, mechanically strengthens the surface coat layer, and contributes to improvement of the electrical insulation properties of the structure.

In the structure of the present invention, the amorphous inorganic material preferably contains low melting glass that has a softening point of from 300°C to 1000°C.

If the amorphous inorganic material in the structure of the present invention contains low melting glass that has a softening point of from 300°C to 1000°C, the surface coat layer can be relatively easily formed by forming a coating layer on the surface of the base by coating or the like method, and heating the coating layer.

If the low melting glass has a softening point of lower than 300°C which is excessively low as a softening point, the layer for forming the surface coat layer under heat is molten, for example, to easily flow to make it difficult to form a layer with a uniform thickness. In contrast, if the low melting glass has a softening point of higher than 1000°C, it is necessary to set the temperature for the heating at a very high temperature, and the heating may deteriorate the mechanical properties of the base. Also in this case, the surface coat layer containing an amorphous inorganic material may not be able to conform to the thermal expansion of the base due to the high temperature, and thus cracks may form in the surface coat layer to lead to peeling of the layer.

In the structure of the present invention, the low melting glass preferably contains at least one of barium glass, boron glass, strontium glass, alumina-silica glass, soda zinc glass, and soda barium glass.

If the low melting glass containing any of the above materials is used as the amorphous inorganic material in the structure of the present invention, a surface coat layer having heat resistance, durability, electrical insulation properties, and low heat conductivity can be formed on the surface of the base.

In the structure of the present invention, a bump is formed by at least one of a weld bead and a weld spatter.

In the structure of the present invention,
the second surface coat layer formed on the surface of such a bump also has a uniform thickness and has the same thickness as the first surface coat layer. This contributes the effects of the present invention, namely excellent properties, including heat insulation properties and electrical insulation properties, of the whole structure.

In the structure of the present invention, the first surface coat layer and the second surface coat layer preferably satisfy a thickness ratio (the thickness of the second surface coat layer/the thickness of the first surface coat layer) of 0.75 to 1.3.

If the ratio of the thickness of the second surface coat layer to the thickness of the first surface coat layer (the thickness of the second surface coat layer/the thickness of the first surface coat layer) is less than 0.75, the bump or edge portion has inferior heat conductivity, which leads to insufficient heat conductivity of the whole structure, and in turn, to poor heat insulation properties. On the other hand, if the ratio of the thickness of the second surface coat layer to the thickness of the first surface coat layer is more than 1.3, the second surface coat layer is so thick that the flow of exhaust gas or the like on the surface coat layer is interrupted, which adversely affects the pressure loss. Additionally, an eddy flow occurs to increase the heat conductivity coefficient between gas (e.g. exhaust gas) and the structure, which adversely affects the heat insulation properties.

The structure of the present invention is produced using a paint set which includes: two kinds of paint compositions for forming a surface coat layer on a base that is made of a metal, and has a flat portion and at least one of a bump and an edge portion on a surface, the paint set including: a first paint composition for forming a first surface coat layer in such a manner to cover the flat portion; and a second paint composition for forming a second surface coat layer in such a manner to cover the at least one of a bump and an edge portion, the first paint composition being free from a crystalline inorganic material and containing an amorphous inorganic material, or containing an amorphous inorganic material and a crystalline inorganic material in combination, the second paint composition containing the amorphous inorganic material and the crystalline inorganic material, the second paint composition containing a higher percentage by weight of the crystalline inorganic material relative to the total amount of the amorphous inorganic material and the crystalline inorganic material in the second paint composition than the percentage by weight of the crystalline inorganic material in the first paint composition relative to the total amount of the amorphous inorganic material and the crystalline inorganic material in the first paint composition.

In the paint set, the second paint composition contains a higher percentage by weight of the crystalline inorganic material relative to the total amount of the amorphous inorganic material and the crystalline inorganic material in the second paint composition than the percentage by weight of the crystalline inorganic material in the first paint composition relative to the total amount of the amorphous inorganic material and the crystalline inorganic material in the first paint composition. Accordingly, in the case where a second surface coat layer is formed by forming a coating layer with the paint composition on a portion such as a bump and heating the coating layer, the paint coating layer is formed into a melt layer with high viscosity, and the resulting second surface coat layer has a large and uniform thickness over the whole portion, and has at least substantially the same thickness as the thickness of the first surface coat layer on a flat portion. As a result, the whole structure of the present invention is provided with excellent properties including heat insulation properties and electrical insulation properties.

In the paint set, the first paint composition is free from the crystalline inorganic material or contains the crystalline inorganic material in an amount of 0.1 to 5% by weight relative to the total amount of the amorphous inorganic material and the crystalline inorganic material in the first paint composition, and the second paint composition contains the crystalline inorganic material in an amount of 5 to 70% by weight relative to the total amount of the amorphous inorganic material and the crystalline inorganic material in the second paint composition.

When the paint set has the features that the first paint composition is free from the crystalline inorganic material or contains the crystalline inorganic material in an amount of 0.1 to 5% by weight relative to the total amount of the amorphous inorganic material and the crystalline inorganic material, and the second paint composition contains the crystalline inorganic material in an amount of 5 to 70% by weight relative to the total amount of the amorphous inorganic material and the crystalline inorganic material, the paint set has the following advantage: in the case where a second surface coat layer is formed by forming a coating layer with the paint composition on a portion such as a bump or an edge portion and heating the coating layer, the coating layer is formed into a melt layer with high viscosity, and the resulting second surface coat layer has a large and uniform thickness over the whole portion, and has at least a thickness not greatly different from the thickness of the first surface coat layer on a flat portion.

The second paint composition preferably contains the crystalline inorganic material in an amount of 20 to 70% by weight relative to the total amount of the amorphous inorganic material and the crystalline inorganic material contained in the second paint composition.

If the second paint composition contains the crystalline inorganic material in an amount of 20 to 70% by weight relative to the total amount of the amorphous inorganic material and the crystalline inorganic material contained in the second paint composition, the second paint composition provides a melt layer containing a higher percentage by weight of the crystalline inorganic material and containing less amorphous inorganic material per unit volume. Therefore, the viscosity of the melt layer is more increased to allow for formation of a thicker surface coat layer on a portion such as a bump.

The crystalline inorganic material in the second paint composition is preferably particles having an average particle size of from 0.1 to 50 $\mu$m.

If the crystalline inorganic material in the second paint composition is particles having an average particle size of from 0.1 to 50 $\mu$m, the second paint composition provides a melt layer in which the contact area of the crystalline inorganic material to the amorphous inorganic material in the molten state is large to increase the viscosity. Hence, a thicker surface coat layer can be formed on a portion such as a bump. The particles of the crystalline inorganic material contained in the second paint composition more preferably have an average particle size of from 0.1 $\mu$m to 10 $\mu$m.

In the paint set, the crystalline inorganic material preferably contains at least one selected from the group consisting of calcia, magnesia, ceria, alumina, and an oxide of a transition metal.

If the paint set contains any of the above compounds as the crystalline inorganic material, generation of defects such as cracks due to deterioration of the mechanical strength of a surface coat layer formed by applying the paint set to the surface of a base can be prevented because the crystalline inorganic material has excellent heat resistance and mechanically strengthen the surface coat layer. Especially, the use of an oxide of aluminum contributes to improvement of the electrical insulation properties of an exhaust pipe.

Also, if the paint set contains an oxide of a transition metal as the crystalline inorganic material, the oxide of a transition metal, having a high infrared emissivity, gives a high infrared emissivity to the surface coat layer.

In the paint set, the crystalline inorganic material more preferably contains at least one selected from the group consisting of $\alpha$-alumina and yttria-stabilized zirconia.

The presence of any of the above compounds as the crystalline inorganic material gives better heat resistance, mechanically strengthens the surface coat layer, and contributes to improvement of the electrical insulation properties of the structure.

In the paint set, the amorphous inorganic material preferably contains low melting glass that has a softening point of from 300°C to 1000°C.

If the amorphous inorganic material in the paint set contains low melting glass that has a softening point of from 300°C to 1000°C, a surface coat layer can be relatively easily formed by forming a coating layer on the surface of the base by coating or the like method, and heating the coating layer.

In the paint set, the low melting glass preferably contains at least one of barium glass, boron glass, strontium glass, alumina-silica glass, soda zinc glass, and soda barium glass.

If the low melting glass containing any of the above materials is used as the amorphous inorganic material in the paint set, a surface coat layer having heat resistance, durability, electrical insulation properties, and low heat conductivity can be formed on the surface of a base.

BRIEF DESCRIPTION OF DRAWINGS

Fig. 1(a) is a cross-sectional view schematically illustrating an example of the structure of the present invention; Fig. 1(b) is an enlarged cross-sectional view of the vicinity of a bump in the structure illustrated in Fig. 1(a); and Fig. 1(c) is an enlarged view of the vicinity of an edge portion in the structure illustrated in Fig. 1(a).

Fig. 2(a) is a cross-sectional view schematically illustrating a member obtained by cutting in half a tubiform body as a base serving as an exhaust system component (hereinafter, such a member is referred to as a half-cut member); Fig. 2(b) is a cross-sectional view schematically illustrating the exhaust system component in the case that the base is a tubiform body; and Fig. 2(c) is an enlarged cross-sectional view of the vicinity of a bump in the half-cut member illustrated in Fig. 2(a).

Fig. 3 is an exploded perspective view schematically illustrating a vehicle engine and an exhaust manifold connected to the vehicle engine which relate to the structure of the present invention.

Fig. 4(a) is an A-A line cross-sectional view of the vehicle engine and the exhaust manifold illustrated in Fig. 3; and Fig. 4(b) is a B-B line cross-sectional view of the exhaust manifold illustrated in Fig. 4(a).

(DETAILED DESCRIPTION)

Hereinafter, the present invention is described in detail. The present invention, however, is not limited by the following description, and appropriate changes may be made without departing from the scope of the present invention.

The following demonstrates the structure of the present invention and the paint set used in production of the structure of the present invention.

First, the structure of the present invention is described.

The structure of the present invention includes: a base that is made of a metal, and has a flat portion and at least one of a bump and an edge portion on a surface; and a surface coat layer that covers the surface of the base, the surface coat layer including: a first surface coat layer that covers the flat portion, and contains an amorphous inorganic material, or a crystalline inorganic material and an amorphous inorganic material in combination; and a second surface coat layer that covers the at least one of a bump and an edge portion, and contains the crystalline inorganic material and the amorphous inorganic material, the second surface coat layer containing a higher percentage by weight of the crystalline inorganic material than does the first surface coat layer.

Fig. 1(a) is a cross-sectional view schematically illustrating an example of the structure of the present invention; Fig. 1(b) is an enlarged cross-sectional view of the vicinity of a bump in the structure illustrated in Fig. 1(a); and Fig. 1(c) is an enlarged view of the vicinity of an edge portion in the structure illustrated in Fig. 1(a).

The structure 10 illustrated in Fig. 1(a) includes a base 11 that is made of a metal and has a flat portion 11a, a bump 11b, and an edge portion 11c on its surface; and a surface coat layer 12 formed on the surface of the base 11.

In the structure 10 illustrated in Fig. 1(a), the surface coat layer 12 formed on the surface of the base 11 is formed from an amorphous inorganic material layer 13 and particles 14a and 14b of a crystalline inorganic material dispersed in the amorphous inorganic material layer 13.

The structure 10, however, may contain air bubbles or the like in the amorphous inorganic material layer 13.

The surface coat layer 12 includes a first surface coat layer 12a covering the flat portion 11a and second surface coat layers 12b covering the bump 11b and the edge portion 11c. The second surface coat layers 12b contain a higher percentage by weight of the crystalline inorganic material particles 14b than the percentage by weight of the crystalline inorganic material particles 14a in the first surface coat layer 12a. Namely, if the crystalline inorganic material particles has the same particle size, the second surface coat layers 12b contain a larger number of crystalline inorganic material particles 14b per unit volume than the number of crystalline inorganic material particles 14a per unit volume of the first surface coat layer 12a. The first surface coat layer 12a covering the flat portion 11a may be free from crystalline inorganic material particles 14a.

The base 11 used in the present invention is a member on which the surface coat layer 12 is to be formed. The base 11 may have a plate shape, a semicylindrical shape, a cylindrical shape, or any other shape, and the cross section thereof may have any peripheral shape such as an oval shape or a polygonal shape.

If the base 11 is a tubiform body, the diameter of the base may not be constant in the longitudinal direction, and the cross-sectional shape of the base perpendicular to the longitudinal direction may not be constant in the longitudinal direction.

The base 11 has the bump 11b and the edge portion 11c formed thereon.

The bump 11 is not particularly limited, and a weld bead or weld spatter generated by welding corresponds to the bump 11b. The base 11 has main faces, each occupying a large area, on the front side and the back side. Typically, the surface coat layer 12 is formed on either one of the main faces, but may be formed on both of the main faces. Also in some cases, a surface coat layer may be required on side face(s) of the base 11 as well as the main face(s) of the base 11. In such a case, the surface coat layer also covers the edge portion 11c. The edge portion exists as a portion to be covered when, for example, part of the exhaust pipe is a double pipe including an inner pipe formed inside and a surface coat layer is formed on the side face(s) of the inner pipe.

In the structure 10 illustrated in Fig. 1(a), the base 11 has the bump 11b and the edge portion 11c, but may have only one of the bump 11b and the edge portion 11c.

The height of the bump 11b is assumed to be from 0.01 to 15 mm, and the width of the bump 11b is assumed to be from 0.01 to 20 mm. The angle of the edge portion 11c in a cross section obtained by cutting the main face of the base 11 perpendicularly is typically 90°. Still, the angle of the edge portion 11c is not limited to 90°, and may be any angle if it is in the range of from 70° to 110°.

The material of the base 11 constituting the structure 10 is, for example, a metal such as stainless steel, steel, iron, and copper, or an alloy such as a nickel alloy (e.g. Inconel, Hastelloy, Invar). The adhesion between the surface coat layer 12 and the base 11 made of a metal can be increased as described below by bringing the coefficient of thermal expansion of the base and that of the amorphous inorganic material layer 13 close to one another.

For good adhesion to the surface coat layer, the base may be subjected to a roughening treatment such as sandblast treatment and chemical agent treatment.

The surface roughness $Rz_{JIS}$ of the surface of the base after the roughening treatment is preferably from 1.5 to 20 μm. The surface roughness $Rz_{JIS}$ of the above roughened surface is a ten point height of roughness profile defined in JIS B 0601 (2001), with a measurement interval of 10 mm.

If the surface roughness $Rz_{JIS}$ of the roughened surface of the base of the structure is less than 1.5 μm, the surface area of the base is small, which makes it difficult to achieve sufficient adhesion between the base and the surface coat layer. In contrast, if the surface roughness $Rz_{JIS}$ of the roughened surface of the base of structure is more than 20 μm, a surface coat layer is not likely to be formed on the surface of the base. This is probably because, if the surface roughness $Rz_{JIS}$ of the roughened surface of the base of the structure is excessively large, the slurry (material composition for a surface coat layer) does not enter the recessed portions of the irregularities formed on the surface of the base, which forms gaps in these portions.

The surface roughness $Rz_{JIS}$ of the roughened surface of the base of the structure can be measured with HANDYSURF E-35B from TOKYO SEIMITSU CO., LTD. in accordance with JIS B 0601 (2001) with a measurement interval of 10 mm.

In the structure of the present invention, the lower limit for the thickness of the base is preferably 0.2 mm, and more preferably 0.4 mm, while the upper limit is preferably 10 mm, and more preferably 4 mm.

If the thickness of the base of the structure is smaller than 0.2 mm, the strength of the structure is insufficient. If the thickness of the base of the structure is greater than 10 mm, the weight of the structure is large, and such a structure could not be easily mounted on a vehicle such as a passenger car, being unsuitable for practical use.

The crystalline inorganic material dispersed in the layer 13 of the amorphous inorganic material constituting the surface coat layer 12 may be the same material in both the first surface coat layer 12a and the second surface coat layers 12b or may be different materials in the first surface coat layer 12a and the second surface coat layers 12b.

The crystalline inorganic material particles 14a and 14b preferably contain at least one selected from the group consisting of calcia, magnesia, ceria, alumina, and an oxide of a transition metal.

Examples of the oxide of a transition metal include zirconia, yttria, niobium oxide, titania, chrome oxide, manganese oxide, iron oxide, copper oxide, cobalt oxide, and chrome oxide.

Specific examples of the inorganic material containing zirconia include yttria-stabilized zirconia, CaO-stabilized zirconia, MgO-stabilized zirconia, zircon, and CeO-stabilized zirconia.

In particular, alumina and yttria-stabilized zirconia which have excellent heat resistance and excellent corrosion resistance are preferred.

In the structure of the present invention, the second surface coat layers contain a higher percentage by weight of the crystalline inorganic material than does the first surface coat layer.

The second surface coat layers 12b contain the crystalline inorganic material particles 14b in an amount of 5 to 70% by weight, and preferably of 20 to 70% by weight.

In the case where the second surface coat layers 12b contain the crystalline inorganic material particles 14b in an amount of 5 to 70% by weight, the second surface coat layers 12b, which are formed by applying a material to the bump 11b and the edge portion 11c, and heating the material into melt layers, have thicknesses not greatly different from the thickness of the first surface coat layer 12a on the flat portion 11a. This is attributed to high viscosity of the melt layers than that of a melt layer likewise formed on the flat portion 11a.

If the percentage by weight of the crystalline inorganic material particles 14b in each of the second surface coat layers 12b is less than 5% by weight, the weight-based proportion of the crystalline inorganic material is excessively low. Therefore, the viscosity of the melt layer decreases to bring difficulties in increasing the thickness of the melt layer on a portion such as a bump, resulting in a thickness ratio of the second surface coat layer 12b to the thickness of the first surface coat layer of lower than 0.75. In contrast, if the percentage by weight of the crystalline inorganic material particles 14b in each of the second surface coat layers 12b is more than 70% by weight, the viscosity of the second coating composition is excessively high. This makes it difficult to form a coating layer having a uniform thickness on a bump or an edge portion or may cause interlayer peeling in a second surface coat layer 12b or cause a second surface coat layer 12b to separate from the base 11 in the process of production, bringing difficulties in formation of a film.

The crystalline inorganic material particles 14b in the second surface coat layers 12b preferably have an average particle size smaller than the average size of the crystalline inorganic material particles 14a in the first surface coat layer 12a.

The crystalline inorganic material particles 14b in the second surface coat layers 12b preferably have an average particle size of 0.1 to 50 μm, and more preferably of 0.1 to 10 μm.

In the case where the crystalline inorganic material particles 14b have an average particle size of 0.1 to 50 μm, the second surface coat layers 12b, which are formed by applying a material to the bump 11b and the edge portion 11c, and heating the material into melt layers, have thicknesses not greatly different from the thickness of the first surface coat layer 12a on the flat portion 11a. This is attributed to higher viscosity of the melt layers than that of a melt layer likewise formed on the flat portion 11a.

If the crystalline inorganic material particles 14b contained in the second surface coat layers 12b have an average particle size of smaller than 0.1 μm, the particle size of the crystalline inorganic material particles 14b is excessively small, and thus the surface area of the crystalline inorganic material in the melt layers increases. The melt layers containing such crystalline inorganic material particles 14b have excessively high viscosity, which makes it difficult to apply the paint composition, or may cause interlayer peeling in a second surface coat layer 12b or cause a second surface coat layer 12b to separate from the base 11 in the process of production, bringing difficulties in formation of a film. If the crystalline inorganic material particles 14b have an average particle size of larger than 50 μm, the particle size of the crystalline inorganic material particles 14b is excessively large, and thus the surface area of the crystalline inorganic material particles in the melt layers is excessively small. The melt layers containing such crystalline inorganic material particles 14b have low viscosity, and are likely to flow. As a result, the thickness of the resulting second surface coat layers 12b is small.

The first surface coat layer 12a is free from the crystalline inorganic material 14a, or contains the crystalline inorganic material 14a in an amount of 0.1 to 5% by weight.

If the percentage by weight of the crystalline inorganic material particles in the first surface coat layer 12a is more than 5% by weight, it is necessary to prepare a paint composition containing an excessively high percentage by weight of the crystalline inorganic material and thereby having high viscosity. If such a paint composition is applied to form a coating layer, and formed into a melt layer in the same manner as for the paint composition for forming a coating layer on a bump and an edge portion, the resulting first surface coat layer 12a has high surface roughness and may cause an eddy flow of gas, such as exhaust gas, flowing over the first surface coat layer, thereby increasing the heat conductivity coefficient between the gas (e.g. exhaust gas) and the structure. This adversely affects the heat insulation properties.

Thus, the average particle size of the crystalline inorganic material particles 14a in the first surface coat layer 12a is preferably larger than the average size of the crystalline inorganic material particles 14b in the second surface coat layer 12b, and is preferably 1 to 51 μm. In the case where the average particle size of the crystalline inorganic material particles 14a is within the above range, the melt layer formed on the flat portion 11a has lower viscosity than the melt layers likewise formed on the bump 11b and the edge portion 11c, but is less likely to flow because the melt layer is present on the flat portion 11a. This allows the first surface coat layer 12a formed on the flat portion 11a to have a desired thickness.

The average particle size of the crystalline inorganic material particles 14a in the first surface coat layer 12a is preferably 1 to 51 μm, and more preferably more than 10 μm and not more than 51 μm.

If the average particle size of the crystalline inorganic material particles 14a in the first surface coat layer 12a is less than 1 μm which is excessively small as a particle size, the surface area of the crystalline inorganic material particles in the melt layer is excessively large. Therefore, the viscosity of the melt layer containing the crystalline inorganic material particles 14a is excessively high, leading to an excessively large thickness of the first surface coat layer 12a. On the other hand, if the average particle size of the crystalline inorganic material particles 14a is more than 51 μm, the crystalline inorganic material partially comes out from the surface of the first surface coat layer 12a, increasing the surface roughness of the first surface coat layer 12a. This may cause an eddy flow of gas, such as exhaust gas, flowing over the first surface coat layer 12a to increase the heat conductivity coefficient between gas (e.g. exhaust gas) and the structure. This adversely affects the heat insulation properties.

The average particle size of the crystalline inorganic material particles 14a in the first surface coat layer 12a is preferably 1.1 to 500 fold, more preferably 10 to 300 fold, larger than the average particle size of the crystalline inorganic material particles 14b in the second surface coat layer 12b.

Since the percentage by weight of the crystalline inorganic material particles 14b in the second surface coat layers 12b is larger than the percentage by weight of the crystalline inorganic material particles in the first surface coat layer 12a as described above, the viscosity of the molten coating layer, obtained by applying a coating composition for forming the second surface coat layers and firing the composition, is high. Hence, the second surface coat layers 12b on the bump 11b and the edge portion 11c are not likely to be thin. As a result, the thickness of the second surface coat layers 12b does not greatly differ from the thickness of the first surface coat layer 12a.

The first surface coat layer 12a preferably has a thickness of from 50 to 1000 μm, and more preferably from 100 to 750 μm. The second surface coat layers 12b each preferably have a thickness that is in a ratio of from 0.75 to 1.3 relative to the first surface coat layer 12a.

If the first surface coat layer 12a has a thickness of smaller than 50 μm, the thickness of the whole surface coat layer 12 is excessively small, and thus the heat insulation performance decreases, failing to raise the temperature of the base sufficiently. If the first surface coat layer 12a has a thickness of larger than 1000 μm, the thickness of the whole surface coat layer 12 is excessively large. In this case, the temperature of the contact surface between the surface coat layer 12 and the base 11 tends to be greatly different from the temperature of the surface exposed to the air when the structure undergoes thermal shock, leading to easy breakage of the surface coat layer 12.

The amorphous inorganic material constituting the surface coat layer 12 of the structure preferably contains low melting glass that has a softening point of 300°C to 1000°C. The amorphous inorganic material as used herein can be low melting glass having a softening point within the above range both in the case of forming the first surface coat layer 12a and in the case of forming the second surface coat layers 12b.

Since in order to form the second surface coat layers 12b, it is necessary to form melt layers having higher viscosity than that for the first surface coat layer 12a, a material that shows higher viscosity at a temperature within the range of the softening point may be used. More preferably, the viscosity of the melt layers is controlled by varying the concentration of the crystalline inorganic material particles in the amorphous inorganic material.

The low melting glass is not particularly limited, but preferably contains at least one of barium glass, boron glass, strontium glass, alumina-silica glass, soda zinc glass, and soda barium glass.

The low melting glass may contain a single kind or multiple kinds of glass as described above.

If the low melting glass has a softening point in the range of from 300°C to 1000°C, the surface coat layer 12 having excellent adhesion to the base can be easily formed on the base made of a metal by applying the molten low melting glass (i.e. performing the coating) to the surface of the base (metal material), and heating and firing the molten glass.

If the low melting glass has a softening point of lower than 300°C which is excessively low as a softening point, the layer for forming the surface coat layer under heat is molten, for example, to easily flow. This makes it difficult to form a layer with a uniform thickness. In contrast, if the low melting glass has a softening point of higher than 1000°C, it is necessary to set the temperature for the heating at a very high temperature, and the heating may deteriorate the mechanical properties of the base.

The softening point can be measured by the method in accordance with JIS R 3103-1:2001 using, for example, an automatic measuring apparatus of glass softening and strain points (SSPM-31) from OPT Corp.

Here, also in the case that a semicylindrical base or a cylindrical base is used for the structure of the present invention, the surface coat layer 12 (the first surface coat layer 12a and the second surface coat layers 12b) is formed on portions of the base corresponding to the flat portion 11a, at least one of the bump 11b and the edge portion 11c in the structure 10 illustrated in Figs. 1. As described above, the surface coat layer 12 may be formed on both faces of the base 11.

Even in the case that the surface coat layer 12 is formed on both faces of the base 11, the first surface coat layer 12a preferably has a thickness of from 50 to 1000 μm.

Next, the method for producing the structure of the present invention is described.

First, the paint set used in production of the structure of the present invention is described.

The paint set includes two kinds of paint compositions for forming a surface coat layer on a base that is made of a metal and has a flat portion and at least one of a bump and an edge portion on its surface.

Specifically, the paint set includes a first paint composition for forming a first surface coat layer in such a manner to cover the flat portion; and a second paint composition for forming a second surface coat layer in such a manner to cover the at least one of a bump and an edge portion, the first paint composition being free from a crystalline inorganic material and containing an amorphous inorganic material, or containing an amorphous inorganic material and a crystalline inorganic material in combination, the second paint composition containing the amorphous inorganic material and the crystalline inorganic material, the second paint composition containing a higher percentage by weight of the crystalline inorganic material relative to the total amount of the amorphous inorganic material and the crystalline inorganic material in the second paint composition than the percentage by weight of the crystalline inorganic material in the first paint composition relative to the total amount of the amorphous inorganic material and the crystalline inorganic material in the first paint composition.

The paint set can be used in production of the structure of the present invention. Here, the use of the paint set is not limited to production of the structure, and the paint set may be used in formation of a coating film or any other process.

The properties (e.g. kind, material, thickness, shape), the bumps, the edge portions, and the like conditions of the base to which the paint set is applied can be the same as those described for the structure of the present invention.

First, the second paint composition is described.

The second paint composition for forming a second surface coat layer in such a manner to cover a portion such as a bump contains an amorphous inorganic material and particles of a crystalline inorganic material, and may also contain other substances such as a dispersion medium and an organic binder.

The crystalline inorganic material in the second paint composition is a material for forming the second surface coat layers of the structure described above, and therefore can be the same as the particles of the crystalline inorganic material contained in the second surface coat layers. The kind and other conditions of the crystalline inorganic material have already been described above for the structure, and are not described again here. It should be noted that the second paint composition contains a higher percentage by weight of the crystalline inorganic material relative to the total amount of the amorphous inorganic material and the crystalline inorganic material in the second paint composition than the percentage by weight of the crystalline inorganic material in the first paint composition relative to the total amount of the amorphous inorganic material and the crystalline inorganic material in the first paint composition.

In the paint set, the second paint composition contains the crystalline inorganic material in an amount of 5 to 70% by weight relative to the total amount of the amorphous inorganic material and the crystalline inorganic material in the second paint composition.

In the case where the second paint composition contains the crystalline inorganic material in an amount of 5 to 70% by weight relative to the total amount of the amorphous inorganic material and the crystalline inorganic material in the second paint composition, a melt layer with high viscosity can be formed in the process of forming a second surface coat layer by forming a coating layer by applying the paint composition to a portion such as a bump or an edge potion and heating the coating layer, and the resulting second surface coat layer has a large and uniform thickness over the whole portion, and has at least a thickness not greatly different from the thickness of a first surface coat layer on a flat portion.

If the percentage by weight of the crystalline inorganic material particles in the second paint composition is less than 5% by weight of the total amount of the amorphous inorganic material and the crystalline inorganic material in the second paint composition which is excessively small, the viscosity of the melt layers is reduced, making it difficult to increase the thickness of the melt layers. In this case, the thickness ratio of the the second surface coat layers 12b on a portion such as a bump to the first surface coat layer may be less than 0.75, and unpainted portions may generate in some cases. On the other hand, if the percentage by weight of the crystalline inorganic material particles in the second paint composition is more than 70% by weight of the total amount of the amorphous inorganic material and the crystalline inorganic material in the second paint composition, a melt layer formed from the second paint composition contains less molten amorphous inorganic material per unit volume. Such a melt layer has high viscosity and makes it difficult to form a second surface coat layer of a uniform thickness on a bump or an edge portion.

The percentage by weight of the crystalline inorganic material in the second paint composition is preferably 20 to 70% by weight relative to the total amount of the amorphous inorganic material and the crystalline inorganic material in the second paint composition.

The crystalline inorganic material particles in the second paint composition preferably have an average particle size of 0.1 to 50 $\mu$m, and more preferably of 0.1 to 10 $\mu$m.

The percentages by weight of the crystalline inorganic material particles in the first paint composition and the second paint composition, as determined relative to the total amount of the amorphous inorganic material and crystalline inorganic material particles, are the same as the percentages by weight of the crystalline inorganic material in the first surface coat layer and the second surface coat layer of the structure of the present invention.

In some cases, the percentage by weight of the crystalline inorganic material particles in the second paint composition relative to the weight of the whole second paint composition is used instead of the percentage by weight of the crystalline inorganic material particles relative to the total amount of the amorphous inorganic material and the crystalline inorganic material particles in the second paint composition because the paint composition contains other components such as a dispersant. In this case, the percentage is referred to as the concentration of the crystalline inorganic material particles in the second paint composition. When the term "concentration" is used for the first paint composition, the term likewise refers to the percentage by weight of the crystalline inorganic material particles to the weight of the whole paint composition.

The concentration of the crystalline inorganic material in the second paint composition is preferably 2 to 50% by weight, and more preferably 10 to 50% by weight of whole the second paint composition.

Preferably, the crystalline inorganic material in the second paint composition eventually has a particle size of 0.1 to 50 μm, and more preferably of 0.1 to 10 μm after wet grinding.

The properties (e.g. kind, material) and the like conditions of the amorphous inorganic material can be the same as those described for the structure of the present invention, and are therefore not described again here. In the structure, the amorphous inorganic material is formed into an amorphous layer through coating, heating, and melting, whereas in preparation of the second paint composition as a raw material, the amorphous inorganic material is used in the form of powder. To prepare the second paint composition, the materials are mixed first, and the mixed materials are subjected to wet grinding. Here, the particle size of the powder of an amorphous inorganic material used is adjusted to an appropriate particle size, and after the mixing, the powder is made to have a desired particle size through the wet grinding.

As described above, since the amorphous inorganic material is to be formed into an amorphous inorganic material layer on the surface of the base through coating, firing, and melting, the particle size of the amorphous inorganic material is not required to be exactly controlled. The particles of the amorphous inorganic material, however, need to be uniformly dispersed in the paint compositions for forming a surface coat layer.

From this viewpoint, the amorphous inorganic material for the second paint composition after the wet grinding eventually has an average particle size of from 0.1 to 100 μm, and more preferably from 1 to 20 μm. If the average particle size is in the range of from 1 to 20 μm, the particles tend to be uniformly dispersed because, supposedly, the influence of the electricity charged on the surface of the particles is small.

Examples of the dispersion medium include water and organic solvents such as methanol, ethanol, and acetone. The blending ratio of the dispersion medium to the powder of the amorphous inorganic material in the second paint composition is not particularly limited, but is preferably, for example, from 50 to 150 parts by weight for each 100 parts by weight of the powder of the amorphous inorganic material. This is because such a ratio can give a viscosity suitable for applying the paint composition to the base.

Examples of the organic binder that can be mixed into the paint composition for forming a surface coat layer include polyvinyl alcohol, methyl cellulose, ethyl cellulose, and carboxymethyl cellulose. These may be used alone or in combination. Also, the dispersion medium and the organic binder(s) may be used in combination.

Next, the first paint composition is demonstrated.

The first paint composition for forming a first surface coat layer in such a manner to cover a flat portion is free from the crystalline inorganic material and contains the amorphous inorganic material, or contains the amorphous inorganic material and the crystalline inorganic material particles. The first paint composition may contain additional components such as a dispersion medium and an organic binder.

The crystalline inorganic material in the first paint composition is a material for forming the second surface coat layers of the structure described above, and therefore may be the same as the crystalline inorganic material in the second surface coat layers. The kind and the like conditions of the crystalline inorganic material have already been described for the structure, are therefore not described again here. It should be noted that the second paint composition contains a higher percentage by weight of the crystalline inorganic material relative to the total amount of the amorphous inorganic material and the crystalline inorganic material in the second paint composition than the percentage by weight of the crystalline inorganic material in the first paint composition relative to the total amount of the amorphous inorganic material and the crystalline inorganic material in the first paint composition.

The percentage by weight of the crystalline inorganic material particles in the first paint composition relative to the total amount of the amorphous inorganic material and the crystalline inorganic material in the first paint composition is determined in the same manner as that for the second paint composition.

The first paint composition may or may not contain the crystalline inorganic material. For higher smoothness of the first paint composition, the first paint composition is preferably free from the crystalline inorganic material. For improved heat resistance of the first paint composition, the first paint composition preferably contains the crystalline inorganic material. In this case, the percentage by weight of the crystalline inorganic material particles relative to the total amount of the amorphous inorganic material and the crystalline inorganic material in the first paint composition is 0.1 to 5% by weight.

If the percentage by weight of the crystalline inorganic material particles in the first paint composition relative to the total amount of the amorphous inorganic material and the crystalline inorganic material in the first paint composition is more than 5% by weight, the prepared first paint composition has high viscosity, resulting in high surface roughness of the first surface coat layer. This may cause an eddy flow of gas, such as exhaust gas, flowing over the first surface coat layer to increase the heat conductivity coefficient between gas (e.g. exhaust gas) and the structure. This adversely affects the heat insulation properties.

Preferably, the crystalline inorganic material in the first paint composition eventually has an average particle size of 1 to 51 μm, and more preferably of more than 10 μm to 51 μm after the wet grinding.

The first paint composition may or may not contain the crystalline inorganic material. In the case where the first paint composition contains the crystalline inorganic material, the percentage by weight of the crystalline inorganic material particles relative to the total amount of the amorphous inorganic material and the crystalline inorganic material in the first paint composition is 0.1 to 5% by weight.

The properties (e.g. kind, material) and the like conditions of the amorphous inorganic material can be the same as those described for the structure of the present invention, and are therefore not described again here. In the structure, the amorphous inorganic material is formed into an amorphous inorganic material layer through coating, heating, and melting, whereas in preparation of the first paint composition as a raw material, the amorphous inorganic material is used in the form of powder. To prepare the first paint composition, the materials are mixed first, and the mixed materials are subjected to wet grinding. Here, the particle size of the powder of an amorphous inorganic material used is adjusted to an appropriate particle size, and after the mixing, the powder is made to have a desired particle size through the wet grinding.

As described above, since the amorphous inorganic material is to be formed into an amorphous inorganic material layer on the surface of the base through coating, firing, and melting, the particle size of the amorphous inorganic material is not required to be exactly controlled. The particles of the amorphous inorganic material, however, need to be uniformly dispersed in the paint composition for forming a surface coat layer.

From this viewpoint, the amorphous inorganic material for the first paint composition after the wet grinding eventually has an average particle size of from 0.1 to 100 μm, and more preferably from 1 to 20 μm. If the average particle size is in the range of from 1 to 20 μm, the particles tend to be uniformly dispersed because, supposedly, the influence of the electricity charged on the surface of the particles is small.

Examples of the dispersion medium and the organic binder contained in the first paint composition include the same ones suggested as examples for the second paint composition. The blending ratio of the dispersion medium to the powder of the amorphous inorganic material in the first paint composition is not particularly limited, but is preferably, for example, from 50 to 150 parts by weight for each 100 parts by weight of the powder of the amorphous inorganic material.

Next, the preparation of the paint compositions for forming a surface coat layer described above and a method for producing an exhaust system component using the paint compositions for forming a surface coat layer are described.

(1) Preparation of base made of metal

A base made of a metal (hereinafter, also referred to as a metal base or a metal material) as a starting material is subjected to a washing treatment for removal of impurities on the surface of the metal base.

The washing treatment is not particularly limited, and can be a conventionally known washing treatment. Specific examples thereof include ultrasonic washing in an alcohol solvent.

After the washing treatment, a roughening treatment may be performed on the surface of the metal base according to need such that the specific surface area of the metal base is increased or the surface roughness of the metal base is adjusted. Specific examples thereof include roughening treatments such as a sandblasting treatment, an etching treatment, and a high-temperature oxidation treatment. These treatments may be performed alone or in combination.

After the roughening treatment, the washing treatment may be further performed.

(2) Process of forming surface coat layer

Materials such as a crystalline inorganic material and an amorphous inorganic material are mixed to prepare a first paint composition for forming a first surface coat layer in such a manner to cover a flat portion and a second paint composition for forming a second surface coat layer in such a manner to cover at least one of a bump and an edge portion.

Specifically, the first paint composition and the second paint composition are each prepared by, for example, preparing powder of the crystalline inorganic material and powder of the amorphous inorganic material each having the predetermined particle size, shape, and the like properties, dry-blending the powder materials in a predetermined blending ratio to prepare a powder mixture, adding water to the mixture, and wet-mixing the mixture with a ball mill. In some cases, the powder of the crystalline inorganic material is not used for the first paint composition.

Here, the blending ratio of the powder mixture to water is not particularly limited, but is preferably 100 parts by weight for each 100 parts by weight of the powder mixture. This is because such a ratio can give a viscosity suitable for applying the paint compositions to the metal base. Also, according to need, the paint compositions for forming a surface coat layer may contain additives such as a dispersion medium (e.g. organic solvent) and an organic binder.

Nonetheless to say, the proportions of the amorphous inorganic material powder and the crystalline inorganic material powder in the first paint composition and the proportions of the amorphous inorganic material powder and the crystalline inorganic material powder in the second paint composition are different, and the blending method is not particularly limited. However, easy preparation can be achieved by using the dispersant and the organic binder at the same proportions for both the compositions, and varying the proportion of the crystalline inorganic material powder and the like to control properties such as viscosity.

(3) Next, the first paint composition is applied to a flat portion of a metal base, and the second paint composition is applied to at least one of the bumps and the edge portions.
Specific examples of the method for applying the paint compositions include spray coating, electrostatic coating, inkjet printing, transfer with an instrument such as a stamp and a roller, brush coating, and electrodeposition.
(4) Then, the metal base in which the flat portion is covered with the first paint composition and at least one of the bumps and the edge portions is covered with the second paint composition is subjected to a firing treatment.

Specifically, the metal base to which the coating compositions were applied is dried, heated and fired, so that first and second surface coat layers are formed.

The firing temperature is preferably not lower than the softening point of the amorphous inorganic material, and is thus preferably from 700°C to 1100°C, although it depends on the kind of the amorphous inorganic material. This is because setting the firing temperature to a temperature not lower than the softening point of the amorphous inorganic material allows the metal base and the amorphous inorganic material to adhere firmly to one another, allowing the first surface coat layer and the second surface coat layers to firmly adhere to the metal base.

The above procedure enables production of the exhaust system component 10 illustrated in Fig. 1 which is an example of the structure of the present invention.

Fig. 2(a) is a cross-sectional view schematically illustrating a member obtained by cutting the base constituting an exhaust system component in half (hereinafter, referred to as half-cut member); Fig. 2(b) is a cross-sectional view schematically illustrating the exhaust system component in the case that the base is a tubiform body; and Fig. 2(c) is an enlarged cross-sectional view of the vicinity of a bump in the half-cut member illustrated in Fig. 2(a).

An exhaust system component 30 illustrated in Fig. 2(b) includes a base 31 that is a tubiform body having the shape of an exhaust pipe, and partly has bumps 31b. The base 31 has, on its inside, a surface coat layer 32 (including a first surface coat layer 32a covering the flat portion and second surface coat layers 32b covering the bumps).

Such an exhaust pipe including the surface coat layer 32 including the first surface coat layer 32a covering the flat portion and the second surface coat layers 32b formed inside the base 31 has very high heat insulation properties. Therefore, use of this exhaust pipe enables an increase in the temperature to the catalyst activation temperature in a short time from the start of the engine, allowing the catalytic converter to work sufficiently from the start of the engine.

A method for producing such an exhaust system component including a tubiform body as the base and a surface coat layer formed inside the tubiform body is described below.

In the case that the exhaust system component (tubiform body) 30 illustrated in Fig. 2(b) is long, it is not impossible to form a surface coat layer on the entire inner surface, but is difficult. Hence, generally, an exhaust system component (half-cut members) 20 (illustrated in Fig. 2(a)) obtained by cutting in half the tubiform body of the base constituting the exhaust system component is used.

In this case, the exhaust system component 30 including the surface coat layer 32 (including the second surface coat layers 32b) formed on the inner surface of the base 31 is produced by forming the surface coat layer 22 (including the second surface layer 22b covering the bumps) on the surface of the base 21, and combining two exhaust system components (half-cut members) 20 together.

Here, a first half-cut member and a second half-cut member obtained by halving a tubiform body are prepared as the metal base. To the surface with a smaller area, i.e., inner surface, of each of the first half-cut member and the second half-cut member, a paint composition is applied. The first half-cut member and the second half-cut member are then subjected to the firing treatment, so that a surface coat layer including second surface coat layers is formed on the first half-cut member and the second half-cut member. After that, the first half-cut member and the second half-cut member are bonded to one another by welding, for example, whereby a tubiform body is obtained.

This procedure allows production of an exhaust system component including a tubiform body as the metal base and a surface coat layer formed on the inner surface of the tubiform body.

Hereinafter, the effects of the structure according to the present invention are listed.

(1) The structure of the present invention includes: a base that is made of a metal, and has a flat portion and at least one of a bump and an edge portion on a surface; and a surface coat layer that covers the surface of the base, the surface coat layer including: a first surface coat layer that covers the flat portion, and contains an amorphous inorganic material, or a crystalline inorganic material and an amorphous inorganic material in combination; and a second surface coat layer that covers the at least one of a bump and an edge portion, and contains the crystalline inorganic material and the amorphous inorganic material, the second surface coat layer containing a higher percentage by weight of the crystalline inorganic material than does the first surface coat layer. Accordingly, the second surface coat layer is formed from a paint composition containing less molten amorphous inorganic material per unit volume than a paint composition for forming the first surface coat layer, and the paint composition for the second surface coat layer, when molten, has higher flow resistance than the paint composition for the first surface coat layer. Therefore, in the case where the second surface coat layer is formed by forming a coating layer with the paint composition on a portion such as a bump or an edge portion and heating the coating layer, the coating layer is formed into a melt layer with high viscosity, and the resulting second surface coat layer has a large and uniform thickness over the whole portion, and has at least the same thickness as the first surface coat layer on a flat portion. As a result, the whole structure of the present invention is provided with excellent properties including heat insulation properties and electrical insulation properties.

(2) In the structure of the present invention, if at least one of calcia, magnesia, ceria, alumina, and an oxide of a transition metal is contained as the crystalline inorganic material, generation of defects such as cracks due to deterioration of the mechanical strength of the surface coat layer can be prevented because particles of the crystalline inorganic material have excellent heat resistance and mechanically strengthen the surface coat layer. Especially, an oxide of aluminum contributes to improvement of the electrical insulation properties of an exhaust pipe. Also, if the surface coat layer contains an oxide of a transition metal as the crystalline inorganic material, the oxide of a transition metal, having a high infrared emissivity, gives a high infrared emissivity to the surface coat layer, and also contributes to excellent adhesion of the surface coat layer to the base.

(3) In the structure of the present invention, the first surface coat layer is free from the crystalline inorganic material or contains the crystalline inorganic material in an amount of 0.1 to 5% by weight, and the second surface coat layer contains the crystalline inorganic material in an amount of 5 to 70% by weight. In the case where the second surface coat layer of the structure of the present invention contains a higher percentage by weight of the crystalline inorganic material than does the first surface coat layer, the second surface coat layer is formed from a paint composition containing less molten amorphous inorganic material per unit volume than a paint composition for forming the first surface coat layer. Thus, the paint composition for the second surface coat layer, when molten, has higher flow resistance than the paint composition for the first surface coat layer. Accordingly, in the case where the second surface coat layer is formed by forming a coating layer with the paint composition on a portion such as a bump or an edge portion and heating the coating layer, the resulting second surface coat layer has a large and uniform thickness over the whole portion, and has at least a thickness not greatly different from the thickness of the first surface coat layer on a flat portion, which is attributed to high viscosity of the paint composition.

(4) In the structure of the present invention, if the amorphous inorganic material contains low melting glass that has a softening point of from 300°C to 1000°C, a surface coat layer can be relatively easily formed by forming a coating layer on the surface of the base by coating or the like method, and heating the coating layer.

(5) In the paint set used in the production of the structure of the present invention, the first paint composition contains only an amorphous inorganic material, or a crystalline inorganic material and an amorphous inorganic material in combination, and the second paint composition contains the crystalline inorganic material and the amorphous inorganic material. The second paint composition contains a higher percentage by weight of the crystalline inorganic material than does the first paint composition. The structure of the present invention can be suitably produced by applying the paint set of these two paint compositions to a flat portion and a portion such as a bump, and then heating and melting the compositions.

(Examples)

Hereinafter, examples showing the structure and the paint compositions for forming a surface coat layer according to the present invention in more detail are described. These examples, however, are not intended to limit the scope of the present invention.

(Example 1)

(1) Preparation of base material

A plate-shaped stainless steel base material (made of SUS430) having a size of 40 mm (length) x 40 mm (width) x 1.5 mm (thickness) including a semicylindrical weld bead having a height of 5 mm, a width of 10 mm, and a length of 40 mm was prepared as a metal base which is the application target. This metal base was subjected to ultrasonic washing in an alcohol solvent, and subsequently subjected to a sandblast treatment so that the surface (on both sides) of the metal base was roughened. The sandblast treatment was carried out using $Al_2O_3$ abrasive grains of #100 for 10 minutes.

With a surface-roughness measuring machine (HANDY SURF E-35B from Tokyo Seimitsu Co., Ltd.), the surface roughness of the metal base was determined with a measurement interval of 10 mm. The results showed that the surface roughness $Rz_{JIS}$ of the metal base material was 8.8 μm.

A plate-like base was produced by the above treatments.

(2) Preparation of first paint composition for first surface coat layer

K4006A-100M ($Bi_2O_3$-$B_2O_3$ glass, softening point: 770°C) from Asahi Glass Co., Ltd. was prepared as the powder of an amorphous inorganic material. The concentration of the amorphous inorganic material in the whole first paint composition was 38% by weight. The concentration is the proportion of the amorphous inorganic material expressed in percentage in the total weight of the first paint composition which contains materials such as water. The powder of the amorphous inorganic material had an average particle size of 15 μm.

In the paint composition, no particles of a crystalline inorganic material were used.

Methyl cellulose from Shin-Etsu Chemical Co., Ltd. (product name: METOLOSE-65SH) was prepared as an organic binder, and blended in an amount that gives a concentration in the whole first paint composition of 0.05% by weight.

In preparation of the paint composition for forming a surface coat layer used in formation of a surface coat layer, water was further added to the paint composition in an amount that gives a concentration of 7% by weight in the whole first paint composition. The resulting mixture was wet-mixed with a ball mill, whereby a first paint composition was prepared.

(3) Preparation of second paint composition for second surface coat layer

A second paint composition for forming a second surface coat layer was prepared by the same method as the method for preparing the first paint composition for forming a first surface coat layer.

As in the case of the first paint composition, K4006A-100M from Asahi Glass Co., Ltd. was used as powder of an amorphous inorganic material, in an amount that gives a concentration of the amorphous inorganic material of 39% by weight in the whole second paint composition. In the paint composition, yttria-stabilized zirconia (YSZ) was blended as particles of a crystalline inorganic material. The percentage by weight of YSZ in the total amount of the amorphous inorganic material and the crystalline inorganic material was 20% by weight. The average particle size of the crystalline inorganic material was 10 μm.

The application target, properties of the first paint composition (the kind of the crystalline inorganic material, the average particle size of the crystalline inorganic material, the percentage by weight of the crystalline inorganic material, the concentration of the amorphous inorganic material), and the properties of the second paint composition (the kind of crystalline inorganic material, the average particle size of the crystalline inorganic material, the percentage by weight of the crystalline inorganic material, the concentration of the amorphous inorganic material) are shown in Table 1.

The average particle size of the particles of the crystalline inorganic material is the average particle size of the particles of the crystalline inorganic material before adding the particles to the materials for forming a surface coat layer, using Laser Diffraction Particle Size Analyzer (SALD-300V) from Shimadzu Corporation.

(4) Production of structure

A film was attached to the bumps and the edge portions of the base to cover the bumps and the edge portions.

The prepared first paint composition was applied to one main surface and side surfaces of the base by spray coating, and the base was dried at 70°C for 20 minutes in a dryer, followed by removal of the film. Then, a film was attached to the surface other than the bumps and the edge portions, and the prepared second paint composition was applied by spray coating. The base was dried at 70°C for 20 minutes in the dryer, and the film was removed. Subsequently, the base was heated and fired at 850°C for 90 minutes in the air, and thereby a surface coat layer was formed.

(5) Evaluation of the obtained structure

Measurement of the thickness (thickness of the first surface coat layer and the thickness of the second surface coat layers), calculation of the thickness ratio (second surface coat layer thickness/first surface coat layer thickness), and evaluation of the properties of the surface coat layer (film formation evaluation on the flat portion, film formation evaluation on the bumps, surface roughness measurement of the surface coat layer, and the overall evaluation) were performed by the following methods.

(Measurement of thickness)

The thickness of each of the first surface coat layer and the second surface coat layers of the obtained structure was measured using DUALSCOPE MP40 from Fischer Instruments K.K.

(Evaluation of film formation on flat portion and bump)

Ten SEM photographs of the interface between the base and the surface coat layer formed on the surface of the base were taken with a scanning electron microscope (Hitachi Chemical Co., Ltd., FE-SEM S-4800). Using the SEM photographs, the structure was evaluated as "failed" if a gap was formed between the surface coat layer and the base and peeling was observed, and evaluated as "passed" if no gap was formed between the base and the surface coat layer.

(Measurement of surface roughness of surface coat layer)

The ten point height of roughness profile $Rz_{JIS}$ was calculated from a roughness curve formed by measuring the surface roughness of the surface coat layer with a surface-roughness measuring machine (HANDYSURF E-35B from TOKYO SEIMITSU CO., LTD.) in accordance with JIS B 0601 (2001), with a measurement interval of 10 mm.

(Overall evaluation)

Based on the evaluation results of the film formation on the flat portion, the film formation on the bumps, and the thickness ratio, a structure to which "passed" was given under all the evaluations was evaluated as an acceptable product, and a structure to which "failed" was given under at least one evaluation was evaluated as a rejected product. Here, the thickness ratio was evaluated using the formula: "heat resistance R ($m^2K/W$) = thickness t (m)/heat conductivity $\lambda$ (W/m·K)" which shows heat insulation level of the structure. A higher value of the heat resistance R means that the heat insulation level is higher, and the heat resistance R is proportional to the thickness t as shown by the formula. Therefore, the heat insulation level here was evaluated using the thickness t instead of determining the heat resistance R. Now, use of the thickness t instead of determining the heat resistance R is discussed from the viewpoint of the flow of gases. When gases flow over the surface of the structure having bumps and edge portions, the bumps and the edge portions of the structure receive a larger amount of heat from gases than the flat portion per unit area and unit time because the flow of gases is disturbed around the bumps and the edge portions. Accordingly, the heat insulation level of the whole structure increases as the thickness of the layer on the bumps and the edge portions increases, and this phenomenon is easily predictable. An exhaust pipe, one of the uses to which the present invention is applied, is considered to have sufficient heat insulation properties if it has a thickness ratio of at least 0.75. Hence, a thickness ratio of at least 0.75 was evaluated as "passed" in the thickness ratio evaluation.

(Examples 2 to 9)

A surface coat layer was formed in substantially the same manner as in Example 1, except that the kind of the base as the application target, the kind, average particle size, and percentage by weight of the crystalline inorganic material used to produce the paint compositions for forming a surface coat layer, and the concentration of the amorphous inorganic material were changed as shown in Table 1.

The application target, properties of the first paint composition (the kind of the crystalline inorganic material, the average particle size of the crystalline inorganic material, the percentage by weight of the crystalline inorganic material, the concentration of the amorphous inorganic material), and the properties of the second paint composition (the kind of crystalline inorganic material, the average particle size of the crystalline inorganic material, the percentage by weight of the crystalline inorganic material, the concentration of the amorphous inorganic material) are shown in Table 1.

(Comparative Examples 1 to 5)

A surface coat layer was formed in substantially the same manner as in Example 1, except that the kind of the base as the application target, the kind, average particle size, and percentage by weight of the crystalline inorganic material used to produce the paint compositions for forming a surface coat layer, and the concentration of the amorphous inorganic material were changed as shown in Table 1.

The application target, properties of the first paint composition (the kind of the crystalline inorganic material, the average particle size of the crystalline inorganic material, the percentage by weight of the crystalline inorganic material, the concentration of the amorphous inorganic material), and the properties of the second paint composition (the kind of crystalline inorganic material, the average particle size of the crystalline inorganic material, the percentage by weight of the crystalline inorganic material, the concentration of the amorphous inorganic material) are shown in Table 1.

[Table 1]

| | Application target | First paint composition | | | | Second paint composition | | | |
|---|---|---|---|---|---|---|---|---|---|
| | | Crystalline inorganic material | | | Amorphous inorganic material | Crystalline inorganic material | | | Amorphous inorganic material |
| | | Kind | Average particle size (μm) | Percentage by weight (wt%) *1 | Concentration (wt%) *2 | Kind | Average particle size (μm) | Percentage by weight (wt%)*1 | Concentration (wt%) *2 |
| Example 1 | Plate | - | - | 0 | 38 | YSZ | 10 | 20 | 39 |
| Example 2 | Plate | α-alumina | 10 | 5 | 38 | YSZ | 10 | 70 | 21 |
| Example 3 | Half-cut member | YSZ *3 | 30 | 1 | 43 | YSZ | 30 | 60 | 26 |
| Example 4 | Cylinder | - | - | 0 | 38 | YSZ | 40 | 70 | 21 |
| Example 5 | Cylinder | α-alumina | 5 | 2 | 38 | α-alumina | 5 | 30 | 33 |
| Example 6 | Plate | α-alumina | 50 | 2 | 38 | α-alumina | 0.1 | 20 | 35 |
| Example 7 | Plate | - | - | 0 | 38 | α-alumina | 50 | 20 | 35 |
| Example 8 | Plate | YSZ | 60 | 1 | 43 | YSZ | 30 | 30 | 36 |
| Example 9 | Plate | α-alumina | 40 | 5 | 38 | YSZ | 0.1 | 70 | 21 |
| Comparative Example 1 | Plate | α-alumina | 0.05 | 35 | 31 | α-alumina | 0.05 | 35 | 31 |
| Comparative Example 2 | Plate | α-alumina | 60 | 35 | 31 | α-alumina | 60 | 35 | 31 |
| Comparative Example 3 | Plate | YSZ | 10 | 3 | 42 | YSZ | 10 | 3 | 42 |
| Comparative Example 4 | Plate | - | - | 0 | 38 | - | - | 0 | 38 |

(continued)

| | Application target | First paint composition | | | | Second paint composition | | | |
|---|---|---|---|---|---|---|---|---|---|
| | | Crystalline inorganic material | | | Amorphous inorganic material | Crystalline inorganic material | | | Amorphous inorganic material |
| | | Kind | Average particle size (μm) | Percentage by weight (wt%) *1 | Concentration (wt%) *2 | Kind | Average particle size (μm) | Percentage by weight (wt%)*1 | Concentration (wt%) *2 |
| Comparative Example 5 | Plate | YSZ | 10 | 75 | 19 | YSZ | 10 | 75 | 19 |

Note: *1 Percentage by weight of crystalline inorganic material: percentage by weight of crystalline inorganic material relative to total amount of amorphous inorganic material and crystalline inorganic material
*2 Concentration of amorphous inorganic material: percentage by weight of amorphous inorganic material relative to total amount of paint composition
*3 YSZ: yttria-stabilized zirconia

The following evaluation results were given in Example 1: the thickness of the first surface coat layer: 50 μm, the thickness of the second surface coat layers: 50 μm, the thickness ratio (second surface coat layer thickness/first surface coat layer thickness): 1, the film formation on the flat portion: passed, the film formation on the bumps: passed, the surface roughness ($Rz_{JIS}$) of the overcoat layer: 0.1 μm, and the overall evaluation: passed.

The following evaluation results were given in Example 2: the thickness of the first surface coat layer: 200 μm, the thickness of the second surface coat layers: 254 μm, the thickness ratio (second surface coat layer thickness/first surface coat layer thickness): 1.27, the film formation on the flat portion: passed, the film formation on the bumps: passed, the surface roughness ($Rz_{JIS}$) of the surface coat layer: 3 μm, and the overall evaluation: passed.

The following evaluation results were given in Example 3: the thickness of the first surface coat layer: 1000 μm, the thickness of the second surface coat layers: 1160 μm, the thickness ratio (second surface coat layer thickness/first surface coat layer thickness): 1.16, the film formation on the flat portion: passed, the film formation on the bumps: passed, the surface roughness ($Rz_{JIS}$) of the surface coat layer: 0.5 μm, and the overall evaluation: passed.

The following evaluation results were given in Example 4: the thickness of the first surface coat layer: 200 μm, the thickness of the second surface coat layers: 220 μm, the thickness ratio (second surface coat layer thickness/first surface coat layer thickness): 1.1, the film formation on the flat portion: passed, the film formation on the bumps: passed, the surface roughness ($Rz_{JIS}$) of the surface coat layer: 0.1 μm, and the overall evaluation: passed.

The following evaluation results were given in Example 5: the thickness of the first surface coat layer: 200 μm, the thickness of the second surface coat layers: 224 μm, the thickness ratio (second surface coat layer thickness/first surface coat layer thickness): 1.12, the film formation on the flat portion: passed, the film formation on the bumps: passed, the surface roughness ($Rz_{JIS}$) of the surface coat layer: 2 μm, and the overall evaluation: passed.

The following evaluation results were given in Example 6: the thickness of the first surface coat layer: 150 μm, the thickness of the second surface coat layers: 187.5 μm, the thickness ratio (second surface coat layer thickness/first surface coat layer thickness): 1.25, the film formation on the flat portion: passed, the film formation on the bumps: passed, the surface roughness ($Rz_{JIS}$) of the surface coat layer: 1 μm, and the overall evaluation: passed.

The following evaluation results were given in Example 7: the thickness of the first surface coat layer: 150 μm, the thickness of the second surface coat layers: 112.5 μm, the thickness ratio (second surface coat layer thickness/first surface coat layer thickness): 0.75, the film formation on the flat portion: passed, the film formation on the bumps: passed, the surface roughness ($Rz_{JIS}$) of the surface coat layer: 0.1 μm, and the overall evaluation: passed.

The following evaluation results were given in Example 8: the thickness of the first surface coat layer: 200 μm, the thickness of the second surface coat layers: 210 μm, the thickness ratio (second surface coat layer thickness/first surface coat layer thickness): 1.05, the film formation on the flat portion: passed, the film formation on the bumps: passed, the surface roughness ($Rz_{JIS}$) of the surface coat layer: 0.5 μm, and the overall evaluation: passed.

The following evaluation results were given in Example 9: the thickness of the first surface coat layer: 500 μm, the thickness of the second surface coat layers: 650 μm, the thickness ratio (second surface coat layer thickness/first surface coat layer thickness): 1.3, the film formation on the flat portion: passed, the film formation on the bumps: passed, the surface roughness ($Rz_{JIS}$) of the surface coat layer: 2.5 μm, and the overall evaluation: passed.

In Comparative Example 1, the particles of the crystalline inorganic material used for both the first and second paint compositions had an average particle size of 0.05 μm which is excessively small. As a result, applicable paints could not be prepared, and thus a coating film was not formed.

The following evaluation results were given in Comparative Example 2: the thickness of the first surface coat layer: 500 μm, the thickness of the second surface coat layers: 350 μm, the thickness ratio (second surface coat layer thickness/first surface coat layer thickness): 0.7 (heat insulation properties are insufficient), the film formation on the flat portion: passed, the film formation on the bumps: passed, the surface roughness ($Rz_{JIS}$) of the surface coat layer: 3 μm, and the overall evaluation: failed.

The following evaluation results were given in Comparative Example 3: the thickness of the first surface coat layer: 500 μm, the thickness of the second surface coat layers: 320 μm, the thickness ratio (second surface coat layer thickness/first surface coat layer thickness): 0.64 (heat insulation properties are insufficient), the film formation on the flat portion: passed, the film formation on the bumps: passed, the surface roughness ($Rz_{JIS}$) of the surface coat layer: 2.5 μm, and the overall evaluation: failed.

The following evaluation results were given in Comparative Example 4: the thickness of the first surface coat layer: 500 μm, the thickness of the second surface coat layers: 300 μm, the thickness ratio (second surface coat layer thickness/first surface coat layer thickness): 0.6 (heat insulation properties are insufficient), the film formation on the flat portion: passed, the film formation on the bumps: passed, the surface roughness ($Rz_{JIS}$) of the overcoat layer: 0.1 μm, and the overall evaluation: failed.

In Comparative Example 5, the percentages by weight of the crystalline inorganic material in the first and second paint composition were both 75% by weight which is excessively high. As a result, applicable paint compositions could not be prepared, and thus a coating film was not formed.

Hereinafter, a specific example of the structure of the present invention is described with reference to the drawings.

The structure of the present invention can be used for an exhaust system component used as a member constituting the exhaust system that is connected to the internal combustion engine such as an engine for passenger cars. The form of the exhaust system component described below is the same as the form of the structure described above except that the base is a tubiform body.

Specifically, the structure of the present invention is suitable as, for example, an exhaust manifold.

Hereinafter, the structure of the present invention is described based on an exemplary exhaust manifold connected to the internal engine such as an engine for passenger cars.

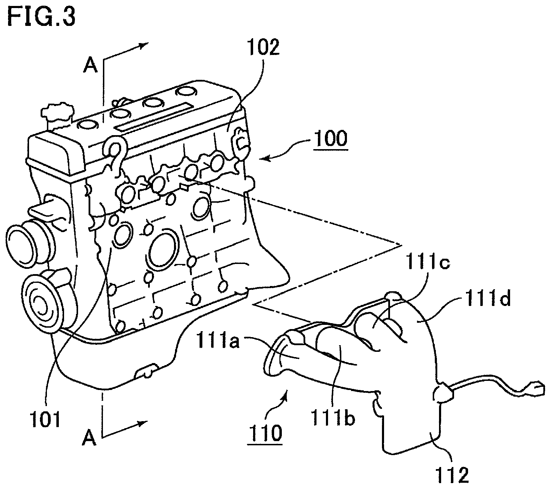

Fig. 3 is an exploded perspective view schematically illustrating a vehicle engine and an exhaust manifold connected to the vehicle engine which relate to the structure of the present invention.

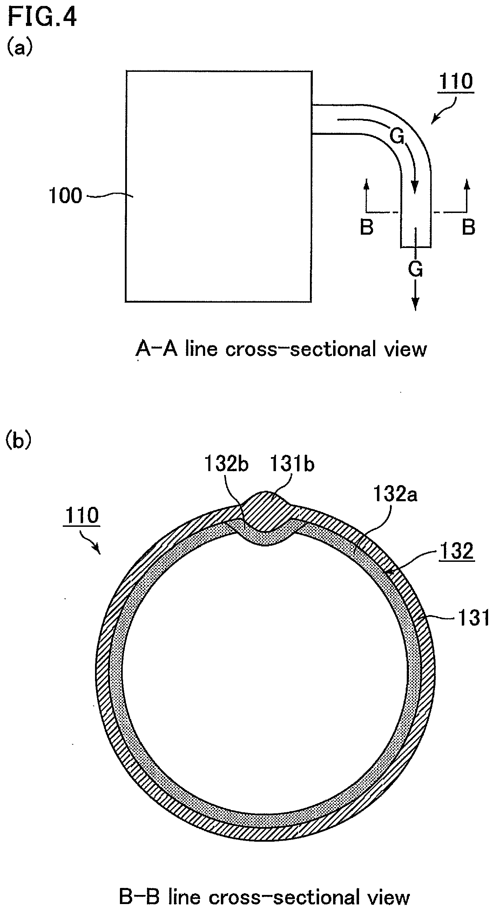

Fig. 4(a) is an A-A line cross-sectional view of the vehicle engine and the exhaust manifold illustrated in Fig. 3; and Fig. 4(b) is a B-B line cross-sectional view of the exhaust manifold illustrated in Fig. 4(a).

As illustrated in Fig. 3 and Fig. 4(a), an engine 100 for passenger vehicles is connected to an exhaust manifold 110 (the structure illustrated in Fig. 1).

The engine 100 includes a cylinder block 101 at the top of which a cylinder head 102 is installed. To one side face of the cylinder head 102, the exhaust manifold 110 is mounted.

The exhaust manifold 110 has a glove-like shape, and includes branch pipes 111a, 111b, 111c, and 111d provided to correspond in number to the cylinders, and a collective portion 112 combining the branch pipes 111a, 111b, 111c, and 111d.

To the exhaust manifold 110, a catalytic converter provided with a catalyst supporting carrier is connected. The exhaust manifold 110 is configured to collect exhaust gas from each cylinder, and send the exhaust gas to a component such as the catalytic converter.

Exhaust gas G (in Fig. 4(a), exhaust gas is indicated by G, and the direction in which the exhaust gas flows is indicated by arrows) discharged from the engine 100 flows into the catalytic converter through the exhaust manifold 110, purified by the catalyst supported by the catalyst supporting carrier, and flows out through a vent.

As illustrated in Fig. 4(b), the exhaust manifold 110 (the structure of the present invention) includes a base made of a metal and the surface coat layer 132 formed on the surface of the base.

In the exhaust manifold 110 (the structure of the present invention) illustrated in Fig. 4(b), the base is a tubiform body, and the surface coat layer 132 is formed on the inner surface of the base.

In the structure (exhaust manifold) of the present invention, the form of the surface coat layer can be the same as that of the surface coat layer of the structure described above.

Fig. 4(b) shows an example in which the form of the surface coat layer 132 included in the exhaust manifold 110 is the same as that of the surface coat layer 12 in the structure 10 illustrated in Fig. 1. The exhaust manifold 110 includes the second surface coat layers 132b on the bumps 131b. Although not illustrated, the amorphous inorganic material 133 includes particles of the crystalline inorganic material dispersed therein.

The structure (exhaust manifold) of the present invention preferably has the surface coat layer on the entire inner surface of the base. This is because the area of the surface coat layer coming into contact with exhaust gases in this case is the maximum, which gives especially good heat resistance. The surface coat layer, however, may be formed on part of the inner surface of the base.

Also in the structure of the present invention, the surface coat layer may be formed on the outer surface, as well as the inner surface, of the base, or may be formed only on the outer surface.

Hereinabove, the structure of the present invention has been described as an exhaust manifold used as an exhaust system component, but the structure of the present invention can be suitably used as, for example, an exhaust pipe, a pipe constituting a catalytic converter, or a turbine housing, as well as an exhaust manifold.

The number of the branch pipes constituting the exhaust manifold is not particularly limited if it is the same as the number of cylinders of the engine. Here, the engine is, for example, a single cylinder engine, a two-cylinder engine, a four-cylinder engine, a six-cylinder engine, or an eight-cylinder engine.

The structure of the present invention described here is the same as the structure of the present invention described based on Fig. 1 except for the shape of the base. Hence, an exhaust system component can be produced in the same manner as in production of the above structure.

In the case of forming the surface coat layer on the inner surface of the base in the structure of the present invention, a base consisting of a first half-cut member and a second half-cut member as described above is preferably used.

The structure of the present invention described here can also achieve the same effects as the effects (1) to (5) of the structure and the paint compositions for forming a surface coat layer described based on Fig. 1.

In the structure of the present invention, the surface coat layer may not necessarily be formed on the entire surface of the base.

For example, in the case of using the structure of the present invention as an exhaust pipe, the surface coat layer may be formed on the inner surface of a tubiform body as a base. In the case of forming a surface coat layer on the inner surface of the tubiform body, however, the surface coat layer needs not be formed on the entire inner surface of the tubiform body as a base if it is formed at least on the parts with which exhaust gas directly comes into contact.

The structure of the present invention essentially features a base that is made of a metal, and has a flat portion and at least one of a bump and an edge portion on its surface; a surface coat layer that is formed from an amorphous inorganic material and particles of a crystalline inorganic material, and covers the surface of the base, the surface coat layer including a first surface coat layer covering the flat portion and a second surface coat layer covering the at least one of a bump and an edge portion, the second surface coat layer comprising a higher percentage by weight of the crystalline inorganic material than does the first surface coat layer.

The desired effects can be achieved by appropriately combining this essential feature with the above-described various configurations (e.g. form of the surface coat layer, the shape of the base, exhaust manifold).

REFERENCE SIGNS LIST

10, 20, 30 Structure (exhaust system component)
11, 21, 31 Base
11a Flat portion
11b, 21b, 31b, 131b Bump
11c Edge portion
12, 22, 32, 132 Surface coat layer
12a, 32a First surface coat layer
12b, 22b, 32b, 132b Second surface coat layer
13 Layer of amorphous inorganic material
14a, 14b Particles of crystalline inorganic material
100 Vehicle engine
110 Exhaust manifold

**Claims**

**1.** A structure comprising:

a base that is made of a metal, and has a flat portion and at least one of a bump and an edge portion on a surface; and
a surface coat layer that covers the surface of the base,
the surface coat layer including: a first surface coat layer that covers the flat portion, and comprises an amorphous inorganic material, or a crystalline inorganic material and an amorphous inorganic material in combination; and a second surface coat layer that covers the at least one of a bump and an edge portion, and comprises the crystalline inorganic material and the amorphous inorganic material,
the second surface coat layer comprising a higher percentage by weight of the crystalline inorganic material than does the first surface coat layer, wherein the first surface coat layer is free from the crystalline inorganic material, or comprises the crystalline inorganic material in an amount of 0.1 to 5% by weight, and the second surface coat layer comprises the crystalline inorganic material in an amount of 5 to 70% by weight,
wherein the bump is formed by at least one of a weld bead and a weld spatter.

**2.** The structure according to claim 1,
wherein second surface coat layer comprises the crystalline inorganic material in an amount of 20 to 70% by weight.

**3.** The structure according to claim 1 or 2,
wherein the crystalline inorganic material in the second surface coat layer is particles having an average particle size of 0.1 to 50 μm.

**4.** The structure according to claim 3,
wherein the particles of the crystalline inorganic material in the second surface coat layer have an average particle size of from 0.1 to 10 μm.

**5.** The structure according to any one of claims 1 to 4,
wherein the crystalline inorganic material contains at least one selected from the group consisting of calcia, magnesia, ceria, alumina, and an oxide of a transition metal.

**6.** The structure according to any one of claims 1 to 4,
wherein the crystalline inorganic material contains at least one selected from the group consisting of $\alpha$-alumina and yttria-stabilized zirconia.

**7.** The structure according to any one of claims 1 to 6,
wherein the amorphous inorganic material contains low melting glass that has a softening point of from 300°C to 1000°C.

**8.** The structure according to claim 7,
wherein the low melting glass contains at least one of barium glass, boron glass, strontium glass, alumina-silica glass, soda zinc glass, and soda barium glass.

**9.** The structure according to any one of claims 1 to 8,
wherein the first surface coat layer and the second surface coat layer satisfy a thickness ratio (the thickness of the second surface coat layer/the thickness of the first surface coat layer) of 0.75 to 1.3.

**Patentansprüche**

**1.** Struktur, umfassend:

eine Basis, die aus einem Metall gefertigt ist und einen flachen Abschnitt und mindestens eines, ausgewählt aus einer Erhebung und einem Kantenabschnitt, auf einer Oberfläche aufweist; und
eine Oberflächenüberzugsschicht, die die Oberfläche der Basis bedeckt,
wobei die Oberflächenüberzugsschicht umfasst:

eine erste Oberflächenüberzugsschicht, die den flachen Abschnitt bedeckt und ein amorphes anorganisches Material oder eine Kombination aus einem kristallinen anorganischen Material und einem amorphen anorganischen Material umfasst;
und eine zweite Oberflächenüberzugsschicht, die mindestens eines, ausgewählt aus der Erhöhung und dem Kantenabschnitt, bedeckt und das kristalline anorganische Material und das amorphe anorganische Material umfasst,
wobei die zweite Oberflächenüberzugsschicht einen höheren Gewichtsprozentsatz des kristallinen anorganischen Materials umfasst als die erste Oberflächenüberzugsschicht,
wobei die erste Oberflächenüberzugsschicht frei von dem kristallinen anorganischen Material ist oder das kristalline anorganische Material in einer Menge von 0,1 bis 5 Gew.-% umfasst und die zweite Oberflächenüberzugsschicht das kristalline anorganische Material in einer Menge von 5 bis 70 Gew.-% umfasst,
wobei die Erhöhung aus mindestens einem, ausgewählt aus einer Schweißnaht und einem Schweißspritzer, gebildet ist.

**2.** Struktur gemäß Anspruch 1, wobei die zweite Oberflächenüberzugsschicht das kristalline anorganische Material in einer Menge von 20 bis 70 Gew.-% umfasst.

**3.** Struktur gemäß Anspruch 1 oder 2, wobei das kristalline anorganische Material in der zweiten Oberflächenüberzugsschicht für Teilchen mit einer mittleren Teilchengröße von 0,1 bis 50 $\mu$m steht.

**4.** Struktur gemäß Anspruch 3, wobei die Teilchen des kristallinen anorganischen Materials in der zweiten Oberflächenüberzugsschicht eine mittlere Teilchengröße von 0,1 bis 10 $\mu$m aufweisen.

**5.** Struktur gemäß einem der Ansprüche 1 bis 4, wobei das kristalline anorganische Material mindestens eines, ausgewählt aus der Gruppe bestehend aus Calciumoxid, Magnesiumoxid, Ceroxid, Aluminiumoxid und einem Oxid eines Übergangsmetalls, enthält.

**6.** Struktur gemäß einem der Ansprüche 1 bis 4, wobei das kristalline anorganische Material mindestens eines, ausgewählt aus der Gruppe bestehend aus α-Aluminiumoxid und Yttriumoxid-stabilisiertem Zirkoniumoxid, enthält.

7. Struktur gemäß einem der Ansprüche 1 bis 6, wobei das amorphe anorganische Material niedrigschmelzendes Glas enthält, das einen Erweichungspunkt von 300°C bis 1000°C aufweist.

8. Struktur gemäß Anspruch 7, wobei das niedrigschmelzende Glas mindestens eines, ausgewählt aus Bariumglas, Borglas, Strontiumglas, Aluminiumoxid-Siliziumoxidglas, Soda-Zinkglas und Soda-Bariumglas enthält.

9. Struktur gemäß einem der Ansprüche 1 bis 8, wobei die erste Oberflächenüberzugsschicht und die zweite Oberflächenüberzugsschicht ein Dickenverhältnis (die Dicke der zweiten Oberflächenüberzugsschicht / Dicke der ersten Oberflächenüberzugsschicht) von 0,75 bis 1,3 erfüllen.

**Revendications**

1. Structure comprenant :

   une base qui est constituée d'un métal, et qui a une partie plate et au moins l'une d'une bosse et d'une partie de bord sur une surface ; et
   une couche de revêtement de surface qui recouvre la surface de la base,
   la couche de revêtement de surface comprenant : une première couche de revêtement de surface qui recouvre la partie plate, et comprend un matériau inorganique amorphe, ou un matériau inorganique cristallin et un matériau inorganique amorphe en combinaison ; et une seconde couche de revêtement de surface qui recouvre la au moins une d'une bosse et d'une partie de bord, et comprend le matériau inorganique cristallin et le matériau inorganique amorphe, la seconde couche de revêtement de surface comprenant un pourcentage plus élevé en poids du matériau inorganique cristallin que la première couche de revêtement de surface, dans laquelle la première couche de revêtement de surface est exempte du matériau inorganique cristallin, ou comprend le matériau inorganique cristallin en une quantité de 0,1 à 5 % en poids, et la seconde couche de revêtement de surface comprend le matériau inorganique cristallin en une quantité de 5 à 70 % en poids,
   dans laquelle la bosse est formée d'au moins l'un d'un cordon de soudure et d'une projection de soudure.

2. Structure selon la revendication 1,
   dans laquelle la seconde couche de revêtement de surface comprend le matériau inorganique cristallin en une quantité de 20 à 70 % en poids.

3. Structure selon la revendication 1 ou 2,
   dans laquelle le matériau inorganique cristallin de la seconde couche de revêtement de surface est formé de particules ayant une taille particulaire moyenne de 0,1 à 50 μm.

4. Structure selon la revendication 3,
   dans laquelle les particules du matériau inorganique cristallin de la seconde couche de revêtement de surface ont une taille particulaire moyenne de 0,1 à 10 μm.

5. Structure selon l'une quelconque des revendications 1 à 4,
   dans laquelle le matériau inorganique cristallin contient au moins un matériau choisi dans le groupe constitué de l'oxyde de calcium, de la magnésie, de l'oxyde de cérium, de l'alumine et d'un oxyde d'un métal de transition.

6. Structure selon l'une quelconque des revendications 1 à 4,
   dans laquelle le matériau inorganique cristallin contient au moins un matériau choisi dans le groupe constitué de l'α-alumine et de la zircone stabilisée à l'oxyde d'yttrium.

7. Structure selon l'une quelconque des revendications 1 à 6,
   dans laquelle le matériau inorganique amorphe contient un verre à bas point de fusion qui a un point de ramollissement de 300 °C à 1 000 °C.

8. Structure selon la revendication 7,
   dans laquelle le verre à bas point de fusion contient au moins l'un parmi un verre au baryum, un verre au bore, un verre au strontium, un verre à l'alumine-silice, un verre à base de soude et de zinc et un verre à base de soude et de baryum.

9. Structure selon l'une quelconque des revendications 1 à 8, dans laquelle la première couche de revêtement de surface et la seconde couche de revêtement de surface répondent à un rapport d'épaisseur (l'épaisseur de la seconde couche de revêtement de surface/l'épaisseur de la première couche de revêtement de surface) de 0,75 à 1,3.

FIG.1

(a)

10
14b
12b
13
12a
13
14a
13
12a
12
12b
11c
13
11a
11
11b
11a
12a

(b)

10
11A
14b
12b
13
12a
13
14a
13
12a
11a
11B
11
11b
11a

(c)

11D
12b
11P
11C
G
11D
11P
11

FIG.2

(a)

22b
21b
22a
20
22
21

(b)

32b
31b
32a
30
32
31
31b
32b

(c)

22A
21b
22B
22b

FIG.3

A
102
100
111c
111d
111a
101
110
111b
A
112

FIG.4

(a)

110
G
100
B
B
G

A-A line cross-sectional view

(b)

132b
131b
132a
110
132
131

B-B line cross-sectional view

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008069383 A
- JP 2009133213 A
- JP 2009133214 A
- EP 2474719 A1